# EUROPEAN PATENT SPECIFICATION

(11) **EP 2 600 658 B1**
(45) Date of publication and mention of the grant of the patent: **13.11.2013**
(21) Application number: 11191580.7
(22) Date of filing: 01.12.2011
(51) Int. Cl.: H04W 52/02

(54) **Mobile wireless communications device having NFC sensor and magnetic sensor and associated methods**
Mobile drahtlose Kommunikationsvorrichtung mit NFC-Sensor und magnetischem Sensor sowie zugehörige Verfahren
Dispositif mobile de communications sans fil doté d'un capteur NFC, capteur magnétique et procédés correspondants

(43) Date of publication of application: 05.06.2013
(73) Proprietor: BlackBerry Limited, Waterloo, ON N2L 3W8 (CA)
(72) Inventor: Zhu, Lizhong, Waterloo, Ontario N2L 3W8 (CA); Zhu, Libo, Waterloo, Ontario N2L 3W8 (CA)
(74) Representative: Hibbert, Juliet Jane Grace

(56) References cited:
- EP-A1- 1 959 332
- EP-A1- 2 364 004
- US-A1- 2006 079 180

## Description

### Technical Field

The present disclosure relates to the field of mobile wireless communications devices, and, more particularly, to mobile wireless communications having NFC sensors and magnetic sensors.

### Background

Mobile wireless communications systems continue to grow in popularity and have become an integral part of both personal and business communications. For example, cellular telephones allow users to place and receive voice calls almost anywhere they travel. Moreover, as cellular telephone technology has increased, so too has the functionality of cellular devices and the different types of devices available to users. For example, many cellular devices now incorporate personal digital assistant (PDA) features such as calendars, address books, task lists, etc. Moreover, such multi-function devices may also allow users to wirelessly send and receive electronic mail (email) messages and access the Internet via a cellular network and/or a wireless local area network (WLAN), for example.

Some cellular devices incorporate contactless card technology and/or Near Field Communication chips. Near Field Communication technology is commonly used for contactless short-range communications based on radio frequency identification (RFID) standards, using magnetic field induction to enable communication between electronic devices, including mobile wireless communications devices. These short-range applications include payment and ticketing, electronic keys, identification, device set-up service and similar information sharing. This short-range high frequency wireless communication technology exchanges data between devices over a short distance, such as only a few centimeters.

In devices with multiple means of wireless communications, issues may sometimes arise when a signal intended for one wireless receiver is received and acted upon by another wireless receiver. This may lead to the device functioning in an undesired manner. As such, further advances in mobile wireless communications device technology are still needed.
U.S. Publication No. 2006/079180 to Hasse is directed to the methods, apparatus, systems and computer program products providing for sensing a magnetic field, emitted by a short-range communication source, to activate short-range communication modules in a mobile terminal. In addition to sensing the magnetic field, the terminal may rely on other parameters, such as operational state of the terminal, contextual information and the like, to determine if the short-range communication module should be activated. As such, the invention reduces the overall power consumption of the terminal by limiting the active state of the short-range communication module. By conserving power the mobile terminal is capable of operating for longer periods of time without requiring charging or replacement of the power supply.
EP Publication No. 1959332 to Research In Motion Limited is directed to a mobile device, through the use of an NFC subsystem, which may determine holster-proximity information, i.e., whether the mobile device is near to (including in) a holster or out of, and away from, the holster. The holster-proximity information may be used by the mobile device to enter into a user-inactive mode. Such entry into a user-inactive mode may involve disabling user interface components, such as input devices and output devices. In particular, the holster-proximity information may be used by the mobile device to disable the keyboard, that is, prevent presses on keys in the keyboard from being recorded. Such disabling may be considered of particular importance when the mobile device is going into and coming out of the holster.
EP Publication No. 2364004 to Research In Motion Limited is directed to a communications device including a housing and radio frequency (RF) circuitry and a processor carried by the housing and operative with each other. A Near Field Communications (NFC) circuit is carried by the housing and connected to the processor. This circuit is configured to detect an NFC enabled tag using an NFC communications protocol when the device is positioned near the tag. The circuit generates a disable signal to the processor upon detecting the NFC enabled tag. The processor is configured to cause the device to enter a locked, operating mode upon receiving the disable signal and to enter or remain in an unlocked, operating mode if the NFC circuit does not generate a disable signal indicative that the NFC circuit has not detected the NFC enabled tag.

### Brief Description of the Drawings

FIG. 1 is a block diagram showing a mobile wireless communications device of the present disclosure in proximity to and communicating with another mobile wireless communications device via near field communications (NFC).

FIG. 2 is a more detailed block diagram showing a mobile wireless communications device of the present disclosure in proximity to and communicating with another mobile wireless communications device via near field communications (NFC).

FIG. 3 is a flowchart illustrating a method of operating a mobile wireless communications device according to the present disclosure.

FIG. 4 is a schematic block diagram illustrating components of a mobile wireless communications device in accordance with an example embodiment of the present disclosure.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a mobile wireless communications device may include a near field communications (NFC) device, and a magnetic sensor. A processor may be coupled to the NFC device and the magnetic sensor, and may be switchable between an active mode and an idle mode based upon the magnetic sensor. The processor may be configured to remain in the active mode based upon communication via the NFC device irrespective of the magnetic sensor.

This mobile wireless communications device advantageously allows the processor to switch to the idle mode based upon the magnetic sensor detecting a magnetic source, such as when the mobile wireless communications device is placed into a holster having a magnet, while not inadvertently switching to the idle mode when "swiped" near another mobile wireless communications device (and thus, a magnet in the speaker of that device) to perform NFC communications.

As will be readily understood by those of skill in the art, the NFC device has a greater operating range than an operating range of the magnetic sensor. Therefore, the NFC device can detect NFC signals at a greater distance than the magnetic sensor can detect magnetic signals.

The magnetic sensor may be configured to generate an idle signal based upon detection of a magnetic source, and the processor may be switchable between the active mode and the idle mode based upon the idle signal. The processor may be configured to remain in the active mode based upon communication via the NFC device irrespective of idle signal.

In addition, a display may be coupled to the processor, and the processor may be configured to activate the display when in the active mode, and to deactivate the display when in the idle mode. The processor may be configured to operate according to a first device indication profile while in the active mode, and to operate according to a second device indication profile while in the idle mode.

Further, an input device may be coupled to the processor, and the processor may be configured to cooperate with the input device to perform at least one device function when in the active mode, and to ignore the input device when in the idle mode. The active mode may be a high power consumption mode, and the idle mode may be a low power consumption mode.

A portable housing may carry the NFC device, the magnetic sensor, and the processor. Additionally, a cellular transceiver may be coupled to the processor and configured to perform at least one cellular communications function.

A method aspect may be directed to a method of operating a mobile wireless communications device comprising a near field communications (NFC) device, a magnetic sensor, a processor coupled to the NFC device and the magnetic sensor, and being switchable between an active mode and an idle mode based upon the magnetic sensor. The method comprises causing the processor to remain in the active mode based upon communication via the NFC device irrespective of the magnetic sensor.

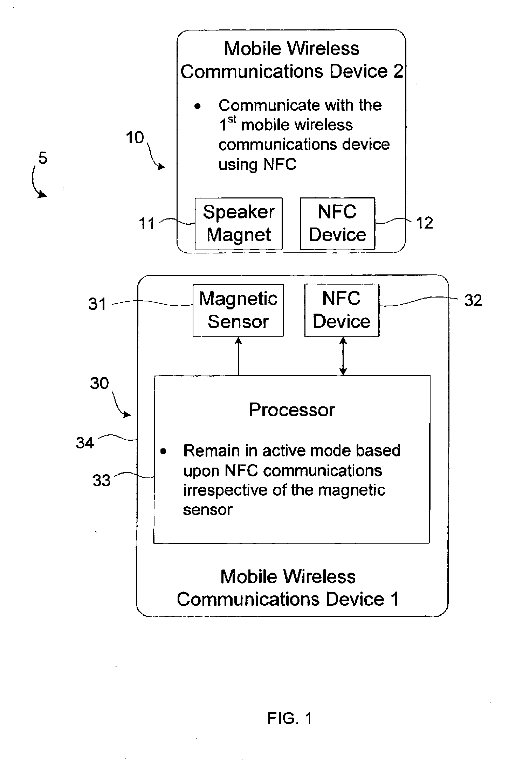

With initial reference to FIG. 1, a communications system **5** including a mobile wireless communications device **30** according to the present disclosure is now described. Here, the mobile wireless communications device **30** includes a portable housing **34** carrying a processor **33** that is coupled to a magnetic sensor **31** and a NFC device **32**. The processor **33** is switchable between an active mode and an idle mode. In some applications, the active mode is a high power consumption mode, and the idle mode is a low power consumption mode. As will be explained below, the active mode may include fully powering other components of the mobile wireless communications device **30**, while the idle mode may include deactivating such components. Additionally, the active mode may include operating the processor **33** at a peak clock speed, while the idle mode may include operating the processor at a slower clock speed.

The magnetic sensor **31** may be a Hall effect sensor, for example, and is used to detect a magnetic source. A holster may be used to carry the mobile wireless communications device **30**, and may include a permanent magnet therein. When mobile wireless communications device **30** is placed in the holster, and thus adjacent the permanent magnet, the magnetic sensor **31** senses the magnet, and the processor **30** then switches to the idle mode to conserve power.

With respect to the NFC device **32**, Near Field Communication (NFC) technology is an extension of the ISO 14443 proximity-card standard as a contactless card, RF ID standard that incorporates the interface of a smart card and a reader into one device. A NFC device typically includes an NFC integrated circuit (IC) chip that communicates with both existing ISO 14443 smart cards and readers and other NFC devices and is compatible with any existing contactless infrastructure. The NFC IC chips use magnetic field induction where two loop antennas are located near each other and form an air-core transformer. The technology operates on the unlicensed radio frequency ISM band of about 13.56 MHz and has a bandwidth of about 2 MHz. The working distance is usually about 0 to 20 centimeters and a user of the NFC device touches another NEC device or tag to initiate communication, with data rates ranging from 106 to about 424 kbit/s. Further details are set forth in the Mobile NFC Technical Guidelines, Version 2.0, November 2007 by GSMA.

The communications system **5** also includes a second mobile wireless communications device **10**. This second mobile wireless communications device **10** includes a speaker having a magnet **11** therein, as well as a NFC device **12**. The second mobile wireless communications device **10** is configured to communicate with the first mobile wireless communications device **30** via the NFC device **12**.

Turning back to the first mobile wireless communications device **30**, the processor **33** is configured to remain in the active mode based upon NFC communications irrespective of the magnetic sensor. Therefore, so long as the first mobile wireless communications device **30** is engaged in NFC communications with the second mobile wireless communications device **10**, the processor **33** will not switch to the idle mode, despite the magnetic sensor **31** detecting a magnetic source (e.g. the magnet **11** in the speaker of the second mobile wireless communications device **10**).

Since NFC communications take place with the participating devices in close proximity to each other, the design of the mobile wireless communications device **30** helps eliminate a situation where the magnetic sensor **31** detects the magnet 11 in the speaker of the second mobile wireless communications device **10**, the processor **33** then mistakenly interprets this as meaning the device has been placed in a holster, and switches into the idle mode at an undesired time. Existing mobile wireless communications devices may be subject to such an issue, which would prove frustrating to a user.

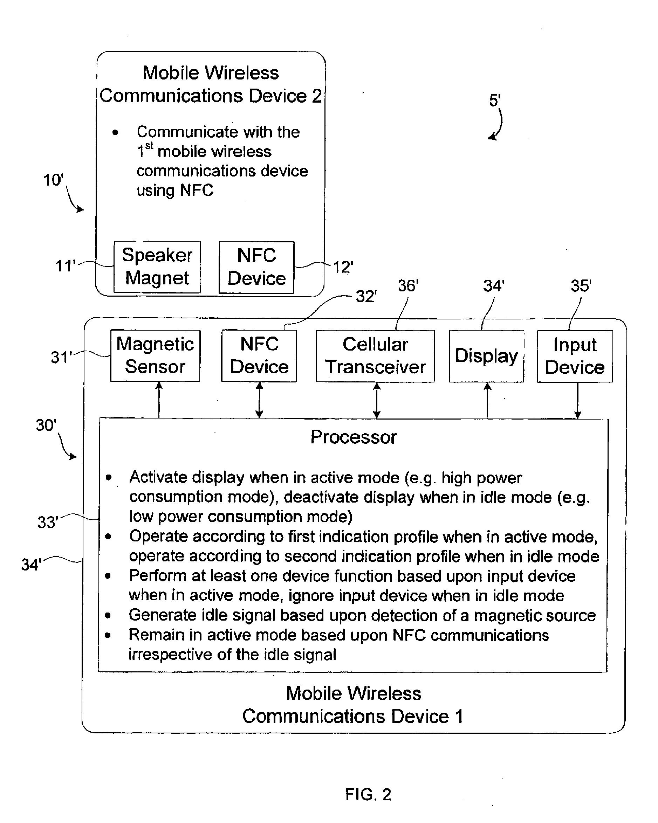

With reference to FIG. 2, a more detailed embodiment of the communications system **5'** is now described. Here, the first mobile wireless communications device **30'** also includes a cellular transceiver **36',** display **34',** and input device **35'** coupled to the processor **33'.** The processor **33'** is configured to cooperate with the cellular transceiver **36'** for performing cellular communications, such as placing or receiving voice calls.

The display **34'** may be a typical liquid crystal display (LCD) or organic light emitting diode display (OLED), as will be appreciated by those of skill in the art. The input device **35'** may be formed from one device, such as a keypad, button, touch sensor, thumbwheel, or trackball, or may be formed from a plurality of such devices. In addition, the display **34'** may be a touch sensitive display, and may function as all or part of the input device **35'.**

Here, the processor **33'** is configured to activate the display **34'** when in the active mode, but to deactivate the display when in the idle mode. In addition, the processor **33'** is configured to operate according to a first indication profile when in the active mode, and to operate according to a second indication profile when in the idle mode. An indication profile specifies how the mobile wireless communications device **30'** indicates a user of incoming messages, e-mails, and voice calls. For example, an indication profile may specify that incoming voice calls are indicated by the playing of an audible ring tone, or that incoming voice calls are indicated by activation of a vibration unit. Further, the processor **33'** may be configured to perform at least one device function based upon the input device **35'** when in the active mode, but to ignore the input device when in the idle mode.

The switching of the processor **33'** between the active mode and the idle mode proceeds similarly as described above with reference to the mobile wireless communications device **30.** The magnetic sensor **31'** cooperates with the processor **33'** to generate an idle signal based upon detection of a magnetic source. The processor **33'** is configured to remain in the active mode based upon NFC communications irrespective of the idle signal.

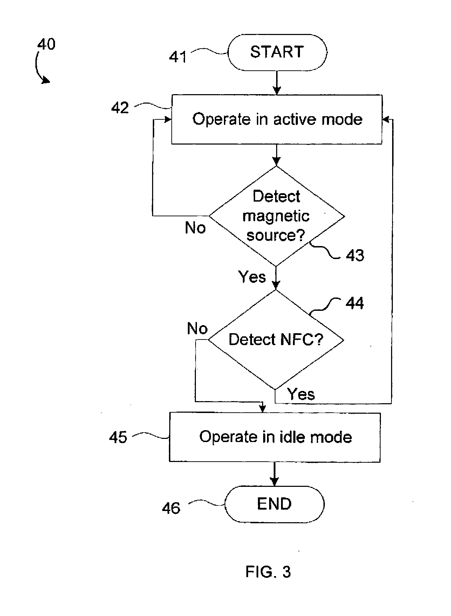

With reference to the flowchart **40** of FIG. 3, a method of operating the mobile wireless communications devices **30, 30'** discussed above is now described. After the start (Block **41**), the processor operates in the active mode (Block **42**). At Block **43,** if a magnetic source is detected, operation proceeds to Block **44.** If a magnetic source is not detected, operation of the processor proceeds in the active mode as the method proceeds back to Block **42**. If a magnetic source is detected, at Block **44**, it is determined whether NFC communications are detected. If NFC communications are detected, then the method proceeds back to Block **42**, and the processor continues operating in the active mode. If NFC communications are not detected, then the method proceeds to Block **45**, and the processor switches to the idle mode. Block **46** indicates the end of the method.

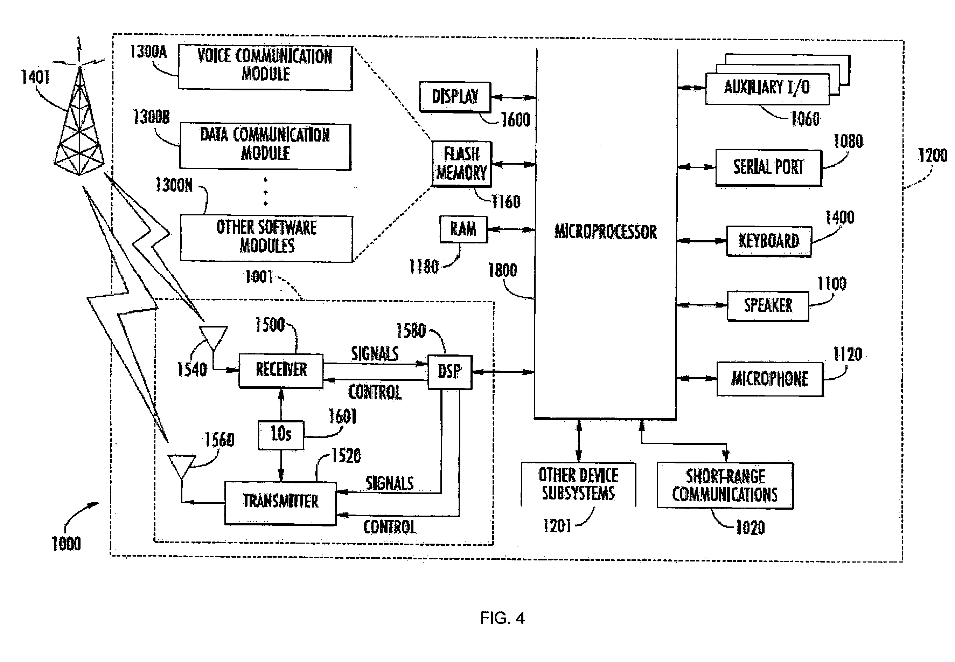

Example components of a hand-held mobile wireless communications device **1000** that may be used in accordance with the present disclosure are further described in the example below with reference to FIG. 4. The device **1000** illustratively includes a housing **1200**, a keypad **1400** and an output device **1600**. The output device shown is a display **1600**, which may comprise a full graphic LCD. In some example embodiments, display **1600** may comprise a touch-sensitive input and output device. Other types of output devices may alternatively be utilized. A processing device **1800** is contained within the housing **1200** and is coupled between the keypad **1400** and the display **1600.** The processing device **1800** controls the operation of the display **1600**, as well as the overall operation of the mobile device **1000**, in response to actuation of keys on the keypad **1400** by the user. In some example embodiments, keypad **1400** may comprise a physical keypad or a virtual keypad (e.g., using a touch-sensitive interface) or both.

The housing **1200** may be elongated vertically, or may take on other sizes and shapes (including clamshell housing structures). The keypad **1400** may include a mode selection key, or other hardware or software for switching between text entry and telephony entry.

In addition to the processing device **1800**, other parts of the mobile device **1000** are shown schematically in FIG. 4. These include a communications subsystem **1001**; a short-range communications subsystem **1020**; the keypad **1400** and the display **1600**, along with other input/output devices **1060**, **1080**, **1100** and **1120**; as well as memory devices **1160**, **1180** and various other device subsystems **1201**. The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160**, but may be stored in other types of memory devices, such as a read only memory (ROM) or similar storage element. In addition, system software, specific device applications, or parts thereof, may be temporarily loaded into a volatile store, such as the random access memory (RAM) **1180**. Communications signals received by the mobile device may also be stored in the RAM **1180**.

The processing device **1800**, in addition to its operating system functions, enables execution of software applications **1300A-1300N** on the device **1000**. A predetermined set of applications that control basic device operations, such as data and voice communications **1300A** and **1300B**, may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401**. The PIM data items may be seamlessly integrated, synchronized and updated via the wireless network **1401** with the device user's corresponding data items stored or associated with a host computer system.

Communication functions, including data and voice communications, are performed through the communications subsystem **1001**, and possibly through the short-range communications subsystem. The communications subsystem **1001** includes a receiver **1500**, a transmitter **1520**, and one or more antennas **1540** and **1560**. In addition, the communications subsystem **1001** also includes a processing module, such as a digital signal processor (DSP) **1580**, and local oscillators (LOs) **1601**. The specific design and implementation of the communications subsystem 1001 is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000**. The mobile device **1000** may also be compliant with other communications standards such as 3GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity module, commonly referred to as a SIM card, in order to operate on a GPRS network.

When required network registration or activation procedures have been completed, the mobile device **1000** may send and receive communications signals over the communication network **1401**. Signals received from the communications network **1401** by the antenna **1540** are routed to the receiver **1500**, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560**.

In addition to processing communications signals, the DSP **1580** provides for control of the receiver **1500** and the transmitter **1520**. For example, gains applied to communications signals in the receiver **1500** and transmitter **1520** may be adaptively controlled through automatic gain control algorithms implemented in the DSP **1580**.

In a data communications mode, a received signal, such as a text message or web page download, is processed by the communications subsystem **1001** and is input to the processing device **1800**. The received signal is then further processed by the processing device **1800** for an output to the display **1600**, or alternatively to some other auxiliary I/O device **1060**. A device user may also compose data items, such as e-mail messages, using the keypad **1400** and/or some other auxiliary I/O device **1060**, such as a touchpad, a rocker switch, a thumb-wheel, track ball, or some other type of input device. The composed data items may then be transmitted over the communications network **1401** via the communications subsystem **1001**.

In a voice communications mode, overall operation of the device is substantially similar to the data communications mode, except that received signals are output to a speaker **1100**, and signals for transmission are generated by a microphone **1120**. Alternative voice or audio I/O subsystems, such as a voice message recording subsystem, may also be implemented on the device **1000**. In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth^{™} communications module to provide for communication with similarly-enabled systems and devices.

Many modifications and other embodiments of the present disclosure will come to the mind of one skilled in the art having the benefit of the teachings presented in the foregoing descriptions and the associated drawings. Therefore, it is understood that the present disclosure is not to be limited to the specific embodiments disclosed, and that modifications and embodiments are intended to be included within the scope of the appended claims.

## Claims

1. A mobile wireless communications device (30) comprising:
a near field communications, NFC, device (32);
a magnetic sensor (31); and
a processor (33) coupled to said NFC device and said magnetic sensor, and being switchable between an active mode and an idle mode upon detecting a magnetic source by said magnetic sensor;
said processor configured to remain in the active mode when communicating via said NFC device irrespective of detecting a magnetic source via said magnetic sensor so that said processor does not switch to the idle mode upon detection of the magnetic source.

2. The mobile wireless communications device (30) of Claim 1, wherein said NFC device (32) has a greater operating range than an operating range of said magnetic sensor (31).

3. The mobile wireless communications device (30) of Claim 1, wherein said magnetic sensor (31) is configured to generate an idle signal based upon detection of a magnetic source; wherein said processor (33) is switchable between the active mode and the idle mode based upon the idle signal; and wherein said processor is configured to remain in the active mode when communicating via said NFC device (32) irrespective of the idle signal.

4. The mobile wireless communications device (30') of Claim 1, further comprising a display (34') coupled to said processor (33'); and wherein said processor is configured to activate said display when in the active mode, and to deactivate said display when in the idle mode.

5. The mobile wireless communications device (30') of Claim 1, wherein said processor (33') is configured to operate according to a first device indication profile while in the active mode, and to operate according to a second device indication profile while in the idle mode.

6. The mobile wireless communications device (30') of Claim 1, further comprising an input device (35') coupled to said processor (33'); and wherein said processor is configured to cooperate with said input device for performing at least one device function when in the active mode, and to ignore said input device when in the idle mode.

7. The mobile wireless communications device (30') of Claim 1, wherein the active mode is a high power consumption mode, and wherein the idle mode is a low power consumption mode.

8. The mobile wireless communications device (30') of Claim 1, further comprising a portable housing carrying (34') said NFC device (32'), said magnetic sensor (31'), and said processor (33').

9. The mobile wireless communications device (30') of Claim 1, further comprising a cellular transceiver (36') coupled to said processor (33') and configured to perform at least one cellular communications function.

10. A method of operating a mobile wireless communications device (30) comprising a near field communications, NFC, device (32), a magnetic sensor (31), a processor (33) coupled to the NFC device and the magnetic sensor, and being switchable between an active mode and an idle mode upon detecting a magnetic source by the magnetic sensor, the method comprising:
maintaining the processor in the active mode when communicating via the NFC device irrespective of detecting a magnetic source via the magnetic sensor so that the processor does not switch to the idle mode upon detection of the magnetic source.

11. The method of Claim 10, wherein the NFC device (32) has a greater operating range than an operating range of the magnetic sensor (31).

12. The method of Claim 10, further comprising activating a display (34') when in the active mode, and deactivating the display when in the idle mode.

13. The method of Claim 10, further comprising operating according to a first device indication profile while in the active mode, and operating according to a second device indication profile while in the idle mode.

14. The method of Claim 10, further comprising cooperating with an input device (35') for performing at least one device function when in the active mode, and ignoring the input device when in the idle mode.

15. The method of Claim 10, wherein the active mode is a high power consumption mode, and wherein the idle mode is a low power consumption mode.

## Patentansprüche

1. Mobile drahtlose Kommunikationsvorrichtung (30), die aufweist:
eine Nahfeldkommunikations(NFC - Near Field Communications)-Vorrichtung (32);
einen magnetischen Sensor (31); und
einen Prozessor (33), der mit der NFC-Vorrichtung und dem magnetischen Sensor gekoppelt ist und zwischen einem aktiven Modus und einem inaktiven Modus umschaltbar ist bei einem Erfassen einer magnetischen Quelle durch den magnetischen Sensor;
wobei der Prozessor konfiguriert ist, bei einem Kommunizieren über die NFC-Vorrichtung in dem aktiven Modus zu bleiben unabhängig von einem Erfassen einer magnetischen Quelle über den magnetischen Sensor, so dass der Prozessor bei einem Erfassen der magnetischen Quelle nicht in den inaktiven Modus umschaltet.

2. Die mobile drahtlose Kommunikationsvorrichtung (30) gemäß Anspruch 1, wobei die NFC-Vorrichtung (32) einen größeren Betriebsbereich als ein Betriebsbereich des magnetischen Sensors (31) hat.

3. Die mobile drahtlose Kommunikationsvorrichtung (30) gemäß Anspruch 1, wobei der magnetische Sensor (31) konfiguriert ist zum Erzeugen eines "inaktiv"-Signals basierend auf einem Erfassen einer magnetischen Quelle; wobei der Prozessor (33) zwischen dem aktiven Modus und dem inaktiven Modus umschaltbar ist basierend auf dem "inaktiv"-Signal; und wobei der Prozessor konfiguriert ist, bei einem Kommunizieren über die NFC-Vorrichtung (32) in dem aktiven Modus zu bleiben unabhängig von dem "inaktiv"-Signal.

4. Die mobile drahtlose Kommunikationsvorrichtung (30') gemäß Anspruch 1, die weiter eine Anzeige (34') aufweist, die mit dem Prozessor (33') gekoppelt ist; und wobei der Prozessor konfiguriert ist zum Aktivieren der Anzeige, wenn in dem aktiven Modus, und zum Deaktivieren der Anzeige, wenn in dem inaktiven Modus.

5. Die mobile drahtlose Kommunikationsvorrichtung (30') gemäß Anspruch 1, wobei der Prozessor (33') konfiguriert ist, gemäß eines ersten Vorrichtungs-Angabe-Profils zu arbeiten, während in dem aktiven Modus, und gemäß eines zweiten Vorrichtungs-Angabe-Profils zu arbeiten, während in dem inaktiven Modus.

6. Die mobile drahtlose Kommunikationsvorrichtung (30') gemäß Anspruch 1, die weiter eine Eingabevorrichtung (35') aufweist, die mit dem Prozessor (33') gekoppelt ist; und wobei der Prozessor konfiguriert ist zum Zusammenarbeiten mit der Eingabevorrichtung, um zumindest eine Vorrichtungsfunktion durchzuführen, wenn in dem aktiven Modus, und zum Ignorieren der Eingabevorrichtung, wenn in dem inaktiven Modus.

7. Die mobile drahtlose Kommunikationsvorrichtung (30') gemäß Anspruch 1, wobei der aktive Modus ein Modus mit hohem Leistungsverbrauch ist, und wobei der inaktive Modus ein Modus mit geringem Leistungsverbrauch ist.

8. Die mobile drahtlose Kommunikationsvorrichtung (30') gemäß Anspruch 1, die weiter ein tragbares Gehäuse (34') aufweist, das die NFC-Vorrichtung (32'), den magnetischen Sensor (31') und den Prozessor (33') trägt.

9. Die mobile drahtlose Kommunikationsvorrichtung (30') gemäß Anspruch 1, die weiter einen zellularen Transceiver (36') aufweist, der mit dem Prozessor (33') gekoppelt ist und konfiguriert ist, zumindest eine zellulare Kommunikationsfunktion durchzuführen.

10. Ein Verfahren zum Betreiben einer mobilen drahtlosen Kommunikationsvorrichtung (30), die aufweist eine Nahfeldkommunikations(NFC - Near Field Communications)-Vorrichtung (32), einen magnetischen Sensor (31), einen Prozessor (33), der mit der NFC-Vorrichtung und dem magnetischen Sensor gekoppelt ist und zwischen einem aktiven Modus und einem inaktiven Modus umschaltbar ist bei einem Erfassen einer magnetischen Quelle durch den magnetischen Sensor, wobei das Verfahren aufweist:
Halten des Prozessors in dem aktiven Modus bei einem Kommunizieren über die NFC-Vorrichtung, unabhängig von einem Erfassen einer magnetischen Quelle über den magnetischen Sensor, so dass der Prozessor bei einem Erfassen der magnetischen Quelle nicht in den inaktiven Modus umschaltet.

11. Das Verfahren gemäß Anspruch 10, wobei die NFC-Vorrichtung (32) einen größeren Betriebsbereich als ein Betriebsbereich des magnetischen Sensors (31) hat.

12. Das Verfahren gemäß Anspruch 10, das weiter aufweist ein Aktivieren einer Anzeige (34'), wenn in dem aktiven Modus, und ein Deaktivieren der Anzeige, wenn in dem inaktiven Modus.

13. Das Verfahren gemäß Anspruch 10, das weiter aufweist ein Arbeiten gemäß eines ersten Vorrichtungs-Angabe-Profils, während in dem aktiven Modus, und ein Arbeiten gemäß eines zweiten Vorrichtungs-Angabe-Profils, während in dem inaktiven Modus.

14. Das Verfahren gemäß Anspruch 10, das weiter aufweist ein Zusammenarbeiten mit einer Eingabevorrichtung (35'), um zumindest eine Vorrichtungsfunktion durchzuführen, wenn in dem aktiven Modus, und Ignorieren der Eingabevorrichtung, wenn in dem inaktiven Modus.

15. Das Verfahren gemäß Anspruch 10, wobei der aktive Modus ein Modus mit hohem Leistungsverbrauch ist, und wobei der inaktive Modus ein Modus mit geringem Leistungsverbrauch ist.

## Revendications

1. Dispositif de communication mobile sans fil (30), comprenant :
un dispositif de communication en champ proche, NFC, (32) ;
un capteur magnétique (31) ; et
un processeur (33) couplé audit dispositif NFC et audit capteur magnétique et pouvant être commuté entre un mode activé et un mode de veille après détection d'une source magnétique par ledit capteur magnétique ;
ledit processeur étant configuré pour rester dans le mode activé lorsqu'il communique au moyen dudit dispositif NFC, que ledit capteur magnétique détecte ou non une source magnétique, si bien que ledit processeur ne passe pas en mode de veille après détection de la source magnétique.

2. Dispositif de communication mobile sans fil (30) selon la revendication 1, dans lequel ledit dispositif NFC (32) a une portée de fonctionnement supérieure à la portée de fonctionnement dudit capteur magnétique (31).

3. Dispositif de communication mobile sans fil (30) selon la revendication 1, dans lequel ledit capteur magnétique (31) est configuré pour produire un signal de veille après détection d'une source magnétique ; dans lequel ledit processeur (33) peut commuter entre le mode activé et le mode de veille en fonction du signal de veille ; et dans lequel ledit processeur est configuré pour rester dans le mode activé lorsqu'il communique avec ledit dispositif NFC (32), sans tenir compte du signal de veille.

4. Dispositif de communication mobile sans fil (30') selon la revendication 1, comprenant en outre un écran d'affichage (34') couplé audit processeur (33') ; et dans lequel ledit processeur est configuré pour activer ledit écran d'affichage lorsqu'il est en mode activé et pour désactiver ledit écran d'affichage lorsqu'il est en mode de veille.

5. Dispositif de communication mobile sans fil (30') selon la revendication 1, dans lequel ledit processeur (33') est configuré pour fonctionner d'après un premier profil indicatif de dispositif lorsqu'il est en mode activé et pour fonctionner d'après un second profil indicatif de dispositif lorsqu'il est en mode de veille.

6. Dispositif de communication mobile sans fil (30') selon la revendication 1, comprenant en outre un dispositif d'entrée (35') couplé audit processeur (33') ; et dans lequel ledit processeur est configuré pour coopérer avec ledit dispositif d'entrée pour exécuter au moins une fonction du dispositif lorsqu'il est en mode activé et pour ignorer ledit dispositif d'entrée lorsqu'il est en mode de veille.

7. Dispositif de communication mobile sans fil (30') selon la revendication 1, dans lequel le mode activé est un mode à consommation électrique élevée et dans lequel le mode de veille est un mode à faible consommation électrique.

8. Dispositif de communication mobile sans fil (30') selon la revendication 1, comprenant en outre un boîtier portatif (34') abritant ledit dispositif NFC (32'), ledit capteur magnétique (31') et ledit processeur (33').

9. Dispositif de communication mobile sans fil (30') selon la revendication 1, comprenant en outre un émetteur-récepteur cellulaire (36') couplé audit processeur (33') et configuré pour exécuter au moins une fonction de communication cellulaire.

10. Procédé de fonctionnement d'un dispositif de communication mobile sans fil (30) comprenant un dispositif de communication en champ proche, NFC, (32), un capteur magnétique (31), un processeur (33) couplé au dispositif NFC et au capteur magnétique et pouvant être commuté entre un mode activé et un mode de veille après détection d'une source magnétique par ledit capteur magnétique, le procédé comprenant l'étape consistant à :
maintenir le processeur dans le mode activé lorsqu'il communique avec ledit dispositif NFC, que ledit capteur magnétique détecte ou non une source magnétique, si ben que ledit processeur ne passe pas en mode de veille après détection de la source magnétique.

11. Procédé selon la revendication 10, dans lequel le dispositif NFC (32) a une portée de fonctionnement supérieure à la portée de fonctionnement du capteur magnétique (31).

12. Procédé selon la revendication 10, comprenant en outre l'étape consistant à activer un écran d'affichage (34') en mode activé et à désactiver l'écran d'affichage en mode de veille.

13. Procédé selon la revendication 10, comprenant en outre les étapes consistant à fonctionner d'après un premier profil indicatif de dispositif en mode activé et à fonctionner d'après un second profil indicatif de dispositif en mode de veille.

14. Procédé selon la revendication 10, comprenant en outre les étapes consistant à coopérer avec un dispositif d'entrée (35') pour exécuter au moins une fonction du dispositif en mode activé et à ignorer ledit dispositif d'entrée en mode de veille.

15. Procédé selon la revendication 10, dans lequel le mode activé est un mode à consommation électrique élevée et dans lequel le mode de veille est un mode à faible consommation électrique.
